# EUROPÄISCHE PATENTANMELDUNG

(11) **EP 0 952 405 A2**
(43) Veröffentlichungstag der Anmeldung: **27.10.1999**
(21) Anmeldenummer: 99106731.5
(22) Anmeldetag: 03.04.1999
(51) Int. Cl.: F24D 3/16, F24D 5/00, F24D 5/10, F24H 9/02

(54) **Fussbodenheizung**

(30) Priorität: 14.04.1998 DE 29806673 U
(71) Anmelder: Rothenberger, Helmut Dr.-jur., 61462 Königstein (DE)
(72) Erfinder: Rothenberger, Helmut Dr.-jur., 61462 Königstein (DE)
(74) Vertreter: Zapfe, Hans, Dipl.-Ing.

(57) **Zusammenfassung**

Eine Fußbodenheizung (1), die mit mindestens einem, auf eine vorhandene Bodenfläche (2) auflegbaren und von dieser wieder aufnehmbaren plattenförmigen Heizkörper (3) mit jeweils mindestens einem Hohlraum für die Durchleitung eines fluiden Heizmediums und mit einer Wärmequelle für die Aufheizung des fluiden Heizmediums versehen ist, besitzt als Wärmequelle einen elektrisch beheizten Durchlauferhitzer (6) für das fluide Heizmedium, der als Flüssigkeitserhitzer oder als Lufterhitzer ausgebildet ist. Dabei können mehrere Heizkörper (3) unter Verbindung ihrer Hohlräume mit dem Durchlauferhitzer (6) formschlüssig miteinander verbunden sein. Als Material für die Heizkörper (3) kommen Strangpreßprofile und/oder mit Nuten versehenen Preßkörper infrage. Vorzugsweise kann bei einer Luftbeheizung mindestens einer der Heizkörper mit einer Vielzahl von Luftaustrittsöffnungen zur direkten Raumbeheizung versehen sein. Auch können der Durchlauferhitzer (6) und der mindestens eine Heizkörper (3) eine Baueinheit darstellen, und der Durchlauferhitzer (6) kann in einen Waschtisch eingebaut sein.

## Beschreibung

Die Erfindung betrifft eine Fußbodenheizung nach dem Oberbegriff des Patentanspruchs 1.

Fest installierte Fußbodenheizungen sind bekannt. Sie lassen sich nachträglich nur mit enormem Aufwand installieren, wobei mehrere Zentimeter Raumhöhe verloren gehen und alle nach innen zu öffnenden Türen entweder unten verkürzt oder oben verkürzt und angehoben werden müssen, was ein Versetzen der Türangeln erforderlich machen würde. Bestimmte Fußbodenarten in Altbauten können nachträglich nicht mehr mit integrierten Fußbodenheizungen versehen werden. Dies führt insbesondere in nicht oder nur schwach beheizbaren Bädern zu Unbequemlichkeiten, weil die kalten und gefliesten Bodenflächen eine starke Wärmesenke darstellen, insbesondere beim Betreten mit nackten Füßen.

Im Gegensatz zu solchen fest installierten Fußbodenheizungen handelt es sich beim Erfindungsgegenstand um eine transportable oder nachrüstbare Fußbodenheizung, insbesondere in Modulbauweise, die nachträglich durch einfaches Auflegen auf die vorhandene Bodenfläche installiert und ggf. auch wieder aufgenommen und an einem anderen Ort wieder installiert werden kann.

Durch die DE 31 00 403 A1 ist eine wiederaufnehmbare Arbeitsplatzmatte bekannt, die zur Vermeidung elektrischer Energie mit Hohlräumen zum Durchleiten von Heiz- oder Kühlflüssigkeiten versehen ist. über eine Quelle für die Erzeugung der Heiz- oder Kühlflüssigkeiten schweigt sich diese Schrift jedoch aus.

Durch das DE 93 06 009 U1 ist ein Wärmeboden, insbesondere für Tierstallungen, bekannt, bei dem ebenfalls auf eine elektrische Energieversorgung verzichtet werden soll. Der Wärmeboden soll vielmehr über selbstschließende Kupplungen an einen vorhandenen Warmwasserkreislauf einer zentralen Gebäudeheizung angeschlossen werden. Dies führt jedoch bei Undichtigkeiten im Wärmeboden und/oder in den Kupplungen zu einem Druckabfall in der Gebäudeheizung und ggf. zu einem Eindringen von Luft, so daß die Gebäudeheizung entlüftet und der Wasserverlust wieder aufgefüllt werden muß. Ein weiterer Nachteil besteht darin, daß die Zenralheizung mit der erforderlichen Vorlauftemperatur und der Umwälzpumpe weiter betrieben muß, wenn der Warmeboden im Einsatz ist, und zwar auch in sog. Übergangszeiten, in denen eine Gebäudeheizung gar nicht oder nur mit reduzierter Vorlauftemperatur betrieben werden könnte. Entsprechende Energieverluste an Brennstoff und elektrischem Strom sind die Folge.

Durch das DE 297 03 432 U1 ist eine transportable Heizmatte für die Anwendung im Freien, beispielsweise für Marktstände, bekannt, die entweder mit Heizdrähten zum Anschluß an das Stromnetz oder mit Hohlräumen für die Durchleitung eines flüssigen Heizmediums versehen sein kann. Für den zuletzt genannten Fall ist ein Durchlauferhitzer mit einer Umwälzpumpe vorgesehen. Dieser Durchlauferhitzer wird durch die Verbrennung von verdampften Flüssiggasen oder anderen flüssigen Brennstoffen wie Mineralöl, RME oder Alkohol beheizt. Dabei entstehen jedoch Abgase, deren Einatmen in geschlossenen Räumen nicht ungefährlich ist und die insbesondere Wasserdampf enthalten, die an kälteren Flächen bzw. Wänden wieder kondensieren, wenn deren Temperatur unterhalb des Taupunktes liegt, was bei Raumtemperatur üblicherweise der Fall ist. Nicht kondensierter Wasserdampf erhöht die Luftfeuchtigkeit und führt in geschlossenen Räumen zu einer extrem unerwünschten schwülen Atmosphäre.

Demgegenüber liegt der Erfindung die Aufgabe zugrunde, eine einfach auszulegende und wiederaufnehmbare Fußbodenheizung der eingangs beschriebenen Gattung anzugeben, die an ein Stromnetz anschließbar ist, autark betrieben werden kann, d.h., keinen Anschluß an einen gebäudeseitigen Heißwasserkreislauf erforderlich macht, keine Verbrennungsgase und insbesondere keine bei Raumtemperatur kondensationsfähigen Gase oder Dämpfe erzeugt und auch die vorhandene Luftfeuchtigkeit nicht erhöht, sondern absenkt.

Die Lösung der gestellten Aufgabe erfolgt erfindungsgemäß durch die Merkmale im Kennzeichen des Patentanspruchs 1.

Durch diese Lösung wird die gestellte Aufgabe in vollem Umfange gelöst. Die erfindungsgemäße Fußbodenheizung läßt sich nachträglich ohne weiteres und auf einfache Weise installieren, wobei kaum nennenswert Raumhöhe verloren geht. Bei entsprechendem Abstand von nach innen zu öffnenden Türen brauchen diese weder unten verkürzt noch oben verkürzt und angehoben werden. Dadurch können alle Arten von Fußböden, auch solche in Altbauten nachträglich mit Fußbodenheizungen versehen werden. Dies führt insbesondere in nicht oder nur schwach beheizbaren Bädern zu einer angenehmen Atmosphäre, weil die kalten und gefliesten Bodenflächen gegen die im Raum befindliche Person abgeschirmt bzw. abgedeckt werden, was insbesondere beim Betreten mit nackten Füßen äußerst angenehm ist.

Die Erfindung benötigt keinen Anschluß an einen gebäudeseitigen Heißwasserkreislauf, kann autark betrieben werden, erzeugt keine Verbrennungsgase und insbesondere keine bei Raumtemperatur kondensationsfähigen Gase oder Dämpfe und erhöht auch nicht die vorhandene Luftfeuchtigkeit, sondern senkt die relative Luftfeuchtigkeit durch Temperaturerhöhung ab, so daß in geschlossenen Räumen keine extrem unerwünscht feuchte oder sogar schwüle Atmosphäre entsteht, die ein Unbehagen erzeugen würde.

Weitere vorteilhafte Ausgestaltungen des Erfindungsgegenstandes ergeben sich aus den Unteransprüchen, ihre Vorteile werden in der Detailbeschreibung näher abgehandelt.

Mehrere Ausführungsbeispiele des Erfindungsgegenstandes und seine weiteren Ausgestaltungsmöglichkeiten werden nachfolgend anhand der Figuren 1 bis 6 näher erläutert.

Es zeigen:
- Figur 1: eine perspektivische Darstellung einer aus mehreren Heizkörpern bestehenden Fußbodenheizung,
- Figur 2: einen vergrößerten Vertikalschnitt durch zwei Heizkörper im Bereich einer Trennfuge,
- Figur 3: eine perspektivische Explosionsdarstellung einer aus drei Heizkörpern bestehenden Fußbodenheizung,
- Figur 4: eine perspektivische Darstellung einer aus mehreren unterschiedlichen Heizkörpern bestehenden Fußbodenheizung zur Erläuterung der verschiedenen Kombinationsmöglichkeiten,
- Figur 5: eine integrale Baueinheit aus Heizkörpern und Durchlauferhitzer in perspektivischer Darstellung und
- Figur 6: die Kombination einer Fußbodenheizung mit einem Waschtisch.

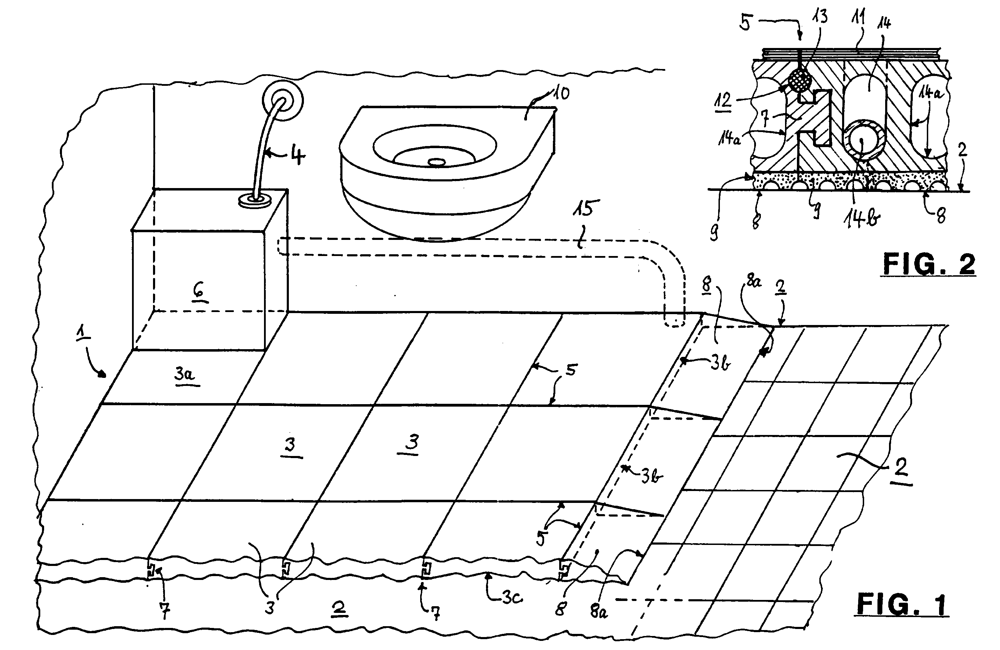

In Figur 1 ist eine Fußbodenheizung 1 dargestellt, die aus mehreren auf eine vorhandene Bodenfläche 2 aufgelegten plattenförmigen Heizkörpern 3 besteht, die an Trennfugen 5 aneinanderstoßen. Ein äußerer elektrischer Anschluß 4 ist durch einen Kabelstrang angedeutet, der zu einem elektrisch beheizten Durchlauferhitzer 6 für die Aufheizung eines Heizmediums führt.

Das besagte Heizmedium kann sowohl Warmwasser (oder eine andere, frostsichere Flüssigkeit) als auch Warmluft sein, wobei Wasser temperaturgeregelt in einem Kreislauf geführt wird, während Warmluft sowohl ganz oder teilweise in einem Kreislauf geführt als auch ganz oder teilweise in die Raumluft entlassen werden kann, was einige zusätzliche Vorteile mit sich bringt: Bei einer Luftheizung entstehen keine Abdichtungsprobleme bei mehrgliedrigen Fußbodenheizungen z.B. bei einer Modulbauweise, ja es kann sogar gezielt Warmluft an dem Raum abgegeben werden.

Bei einem geschlossenen Heizkreislauf ist nur eine geringe mittlere Heizleistung erforderlich, die im Beharrungszustand gerade die Wärmeabgabe an die Umgebung deckt, so daß ein Gleichgewicht eingestellt wird, erforderlichenfalls durch Temperaturregelung. Bei einem ganz oder teilweise offenen Warmluftsystem kann eine wesentlich größere Heizleistung angewandt werden, wodurch das gesamte Raumklima schneller in den Bereich des Wohlbefindens gebracht werden kann, erforderlichenfalls auch hierbei durch Temperaturregelung.

Innerhalb der Fußbodenheizung 1 erfolgt die Weiterleitung des fluiden Heizmediums durch innere Kanäle und - bei Flüssigkeiten - durch hier nicht dargestellte Steckverbindungen oder Kupplungen, die gleichfalls verdeckt in den Trennfugen 5 untergebracht sind und die auch die Trennfugen 5 überbrücken.

Alternativ kann die Beheizung außer durch ein fluides Medium wie Luft oder Wasser auch durch Öl oder andere flüssige Kohlenwasserstoffe als Wärmeträger in einem geschlossenen Kreislauf durchgeführt werden, wobei der flüssige Kohlenwasserstoff gleichfalls in dem elektrisch beheizten Durchlauferhitzer 6 aufgeheizt wird. Ausreichend sind Temperaturen zwischen etwa 30 und 50 Grad. Die Anschlüsse liegen in diesem Falle verdeckt in einer Verteilerplatte 3a, die gleichfalls die Funktion eines Heizkörpers hat, unterhalb des Wärmetauschers 6. Der Kreislauf kann auch durch eine externe Leitung 15 geschlossen werden, die noch nicht einmal thermisch isoliert zu sein braucht, weil sie zur Raumheizung beiträgt. Diese gestrichelt angedeutete Leitung 15 führt dann vom jenseitigen Ende der Fußbodenheizung 1 zurück zum Durchlauferhitzer 6.

Die Heizkörper 3 haben einen quadratischen Grundriß mit etwa 50 cm Kantenlänge und sind in einem Rastermaß angeordnet. Es ist ersichtlich daß die Zahl und die Verteilung der Heizkörper beliebig gewählt und gestaltet werden können. Die einzelnen Heizkörper 3 sind starr ausgebildet, um eine gegenseitige Bewegung und ein örtliches Abheben von der Bodenfläche 2 zu verhindern. Sie können aber auch flexibel nach Art von Matten ausgebildet sein, wenn sichergestellt ist, daß sie sich beim Betreten nicht aufwärts biegen und/oder verschieben können. Zu dem gleichen Zweck, und um eine Verschiebung auf der Bodenfläche zu unterbinden, sind die einzelnen Heizkörper 3 formschlüssig miteinander verbunden, beispielsweise durch Schwalbenschwanzverbindungen oder durch die gezeigten, hinterschnittenen Feder-Nut-Verbindungen 7.

Um Stolperstellen zu vermeiden, sind die nicht mit einem benachbarten Heizkörper 3 verbundenen Außenseiten 3b der Heizkörper 3 mit keilförmigen übergangsstücken 8 verbunden, deren Keilschneiden 8a in der gleichen Ebene wie die Unterseiten 3c aller übrigen Heizkörper 3 und 3a liegen. Es können aber auch am Außenumfang - nicht dargestellte - besondere Heizkörper verwendet werden, an die analoge "Rampen" angeformt sind.

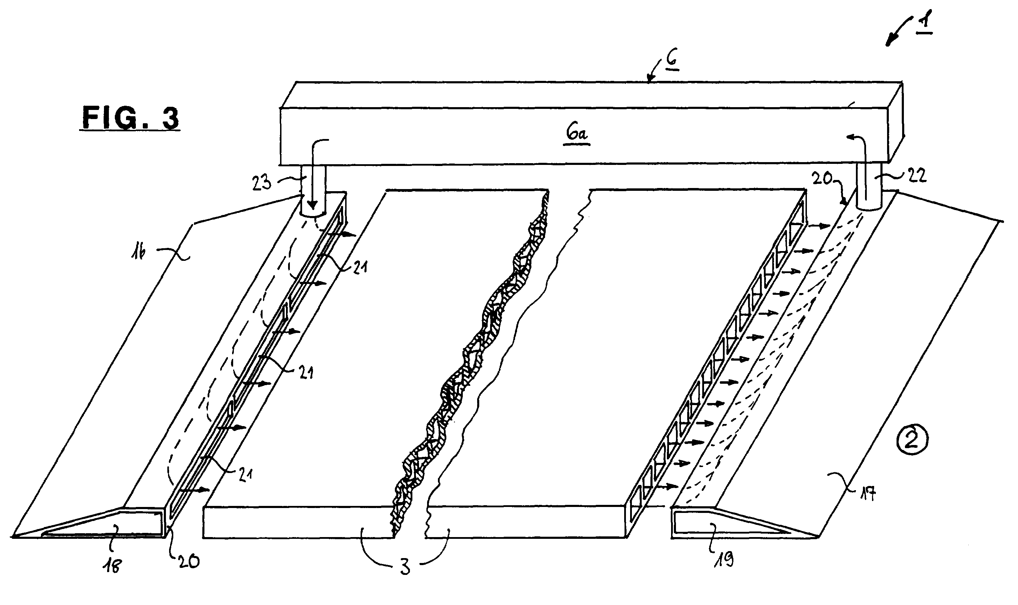

Damit keine unnötigen Wärmemengen an die Bodenfläche 2 abgegeben werden und um die Aufheizzeit abzukürzen, sind die Unterseiten 3c der Heizkörper 3, zum Beispiel an den Ecken und ggf. zusätzlich in der Mitte, mit mindestens einem wärmedämmenden Abstandshalter versehen. In diesem Falle wirkt die zwischen den Heizkörpern 3 und der Bodenfläche 2 befindliche Luft als Wärmeisolator. Alternativ können die wärmedämmenden Abstandshalter als - vorzugsweise profilierte - Wärmedämmplatten 9 ausgebildet sein, die in Figur 2 dargestellt sind und deren Umriß dem Umriß der Heizkörper 3 entspricht. Vorzugsweise haben dabei die Wärmedämmplatten 9 Anti-Gleiteigenschaften.

Um das Aussehen zu verbessern und beispielsweise an die Möblierung und/oder an sanitäre Einrichtungsgegenstände wie an ein Waschbecken 10 oder an Badezimmermöbel anzupassen, sind die Oberseiten der Heizkörper 3 und 3a mit einem Dekorbelag 11 versehen, der vorzugsweise rutschsicher ist. Ein "Edelbelag" kann aus dünnen Marmor- oder Kunststeinplatten bestehen. Wie gezeigt, sind die Heizkörper vor, unter und seitlich des Waschbeckens 10 angeordnet. Es ist aber auch möglich, eine Heizkörpergruppe auf der Einstiegsseite einer Badewanne oder Duschkabine, vor einem Klosettbecken und/oder einem Bidet anzuordnen, in Winkelform um eine Badewanne herum zu gruppieren oder mit Abstand von den Raumwänden auszulegen, was im einzelnen nicht dargestellt ist.

Das Eindringen oder Einsickern von Feuchtigkeit wird dadurch verhindert, daß in den Trennfugen 5 zwischen den Heizkörpern 3 und 3a Dichtungsmaterial 12 angeordnet ist. Dieses kann beispielsweise durchgehend in Form von Silikonharz in Nuten eingespritzt werden, die in den Trennfugen 5 angeordnet sind, wie in Figur 2 dargestellt. Alternativ sind in die Trennfugen 5 zwischen den Heizkörpern 3 und 3a Dichtungsprofile 13 eingelegt.

Eine sehr wirksame Abdichtung kann auch dadurch erreicht werden, daß entweder alternativ oder zusätzlich die Dekorbeläge 11 mehrerer Heizkörper 3 und 3a die Trennfugen 5 überdeckend angeordnet sind, was nicht besonders dargestellt ist.

Eine besonders einfache und preiswerte Herstellung kann darin bestehen, daß die Heizkörper 3 und 3a mit einseitig offenen Nuten 14 versehen sind, was gleichfalls in Figur 2 durch die gestrichelten Linien angedeutet ist. Nach oben offene Nuten 14 werden dabei durch den - entsprechend steifen - Dekorbelag 11 verschlossen. Nach unten offene Nuten werden durch die Wärmedämmplatte 9 verschlossen. In die Nuten können auch über alle Heizkörper durchgehend verlegte Rohre eingelegt werden (was nicht dargestellt ist), wodurch die ansonsten notwendigen Verbindungsstellen zwischen den einzelnen Heizkörpern 3 und 3a entfallen können. Will man hingegen die Heizkörper bei einem Umzug wieder aufnehmen, so empfiehlt es sich, zwischen den einzelnen Heizkörpern Trennstellen bzw. Kupplungen anzuordnen.

Für eine Beheizung durch eine Flüssigkeit empfiehlt es sich, in den Heizkörpern 3 und 3a Rohre 14b vorzusehen, wenn die Nuten 14 einseitig offen sind. Zum Beispiel kann ein weiches Kupferrohr 14b in die Nuten eingepreßt werden, wodurch sich ein sehr guter Wärmeübergang ergibt.

Der tragende Teil der Heizkörper 3 und 3a kann dabei aus Metall, z.B. einer Aluminiumlegierung, einem in einer Form gepreßten oder aus einem extrudierten Kunststoff und/oder einem anderen Preßwerkstoff bestehen, wie aus mit einem vorzugsweise wasserfesten Bindemittel gebundenem Spanplatten-, Mineralplatten- oder Textilfasermaterial und sogar aus anderweitig nicht verwertbaren, aber beständigen Abfallstoffen, die dadurch zu Wertstoffen werden. Z.B. können die tragenden Teile der Heizkörper 3 und 3a aus Strangpreßprofilen oder aus mit einseitig offenen Nuten 14 versehenen Preßkörpern bestehen. Dabei ist es auch möglich, die Elemente der formschlüssigen Verbindungen 7 nachträglich durch spanabhebende Bearbeitungsvorgänge wie durch Fräsen herzustellen.

Figur 3 zeigt einen Heizkörper 3 mit einem ganzen Register von durchgehenden Strömungskanälen, durch die beispielhaft Warmluft hindurchgeleitet wird. Solche plattenförmigen Teile sind beispielsweise als sogenanntes extrudiertes "Stegglas" für Kleindächer und mit beträchtlichen Längen im Handel. Keilförmige Endstücke 16 und 17 sind gleichfalls Strangprofile und Heizkörper, deren Enden durch keilförmige Wände 18 und 19 verschlossen sind. In den senkrechten Seitenwänden 20 sind Öffnungen 21 eingearbeitet, durch die warme Luft in Richtung der Pfeile in den Heizkörper 3 eingeleitet wird. An dessen anderem Ende tritt wiederum leicht abgekühlte Luft in Richtung der Pfeile aus und in das andere Endstück 17 ein. Das Endstück 16 ist mithin ein Verteilerkanal, und das Endstück 17 ein Sammelkanal.

Über Rohrstutzen 22 und 23 wird die warme Luft im Kreislauf durch den Durchlauferhitzer 6 geführt, in dem ein Heizwiderstand und ein Gebläse (beides nicht gezeigt) in Reihenschaltung angeordnet sind. Für die Aufbringung der Heiz- und Transportleistung reicht beispielsweise eine Anordnung aus, wie sie in Haartrocknern zu finden ist. Die Austrittstemperatur wird vorzugsweise auf etwa 40 Grad geregelt, damit der Heizkörper 3 auch mit bloßen Füßen (z.B. im Bad) betreten werden kann. Eine entsprechend geringe Heizleistung reicht völlig aus, da die Luft - im Gegensatz zum Haartrockner - im Kreislauf umgewälzt wird und lediglich die Wärmeverluste ausgeglichen werden müssen. Dennoch entsteht über der Anordnung eine wohlige Atmosphäre, die den Einfluß der kalten Bodenfläche 2 verdrängt.

Die Rohrstutzen 22 und 23 sind vorzugsweise weitgehend dicht teleskopartig im Gehäuse 6a des Durchlauferhitzers 6 geführt, damit der Wärmetauscher 6 auf die Endstücke 16 und 17 und auf den Heizkörper 3 abgesenkt werden kann und mit diesem - optisch ansprechend - eine Einheit bildet. Die Anordnung kann leicht zerlegt und aufgenommen und an einem anderen Ort wieder ohne Werkzeuge zusammengesteckt werden. Konstruktive Elemente des Gegenstandes der Figuren 1 und 2 können ohne weiteres übernommen werden.

Es ist jedoch auch möglich, bei einer entsprechend höheren Heizleistung das Endstück 17 wegzulassen (oder mit Öffnungen zu versehen) und die warme Luft in den Raum austreten zu lassen, so daß zusätzlich zur Wärmedämmung gegenüber der Bodenfläche 2 auch eine Raumheizung stattfindet. Vorzugsweise richtet man dann die offenen Enden der Kanäle in Richtung auf ein Klosettbecken oder auf die Einstiegsseite einer Duschkabine aus. Auf diese Weise wird eine zusätzliche Fernwirkung der Fußbodenheizung erzielt.

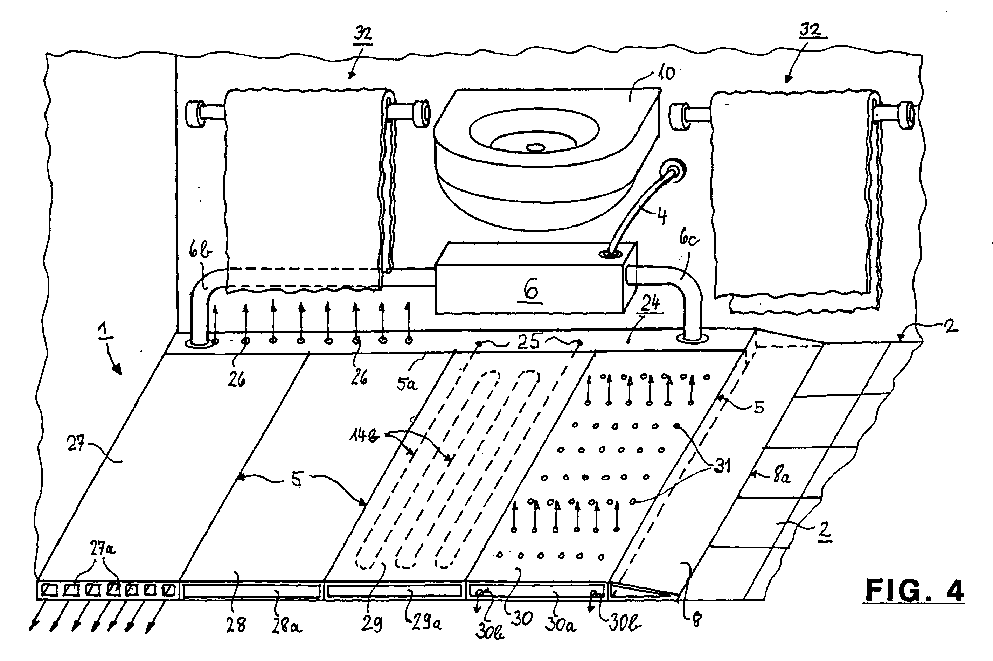

Figur 4 zeigt - zur Erläuterung der verschiedenen Einsatz- und Kombinationsmöglichkeiten - eine perspektivische Darstellung einer aus mehreren - teilweise unterschiedlichen Heizkörpern 27, 28, 29 und 30 bestehenden Fußbodenheizung. Kernstück ist in diesem Falle ein durchgehender, geschlossener Hohlkörper 24, an den alle gleichlangen und rechteckigen Heizkörper, parallel zueinander ausgerichtet, angeschlossen sind. über dem Hohlkörper ist ein Durchlauferhitzer 6 angeordnet, der wahlweise für die Erzeugung von Warmluft und/oder Heizflüssigkeit ausgebildet sein kann und der über Leitungen 6b und 6c an die beiden Enden des Hohlkörpers 24 angeschlossen ist. Bei einer Ausbildung als Warmlufterzeuger besitzt der Durchlauferhitzer 6 in seinem Innern nicht gezeigte Leiteinrichtungen für die jeweils erforderliche Luftführung. In den meisten Fällen werden innerhalb einer Fußbodenheizung 1 an den Hohlkörper 24 gleichartige Heizkörper angeschlossen werden. Es ist jedoch möglich, oberhalb einer Fußbodenheizung durch Variation der Heizkörper auch unterschiedliche "Klimazonen" zu schaffen.

Der Durchlauferhitzer 6 und der Hohlkörper 24 können auch als integrales Bauteil ausgeführt sein und beispielsweise in gemeinsames Gehäuse besitzen, was nicht besonders dargestellt ist.

Der Heizkörper 27 ist ein Luftheizkörper analog Figur 3, allerdings zur zusätzlichen Raumbeheizung an einem Ende offen, so daß die Öffnungen 27a der in Längsrichtung durchgehenden Luftkanäle zu sehen sind.

Der Heizkörper 28 ist gleichfalls ein Luftheizkörper, allerdings an seinen freien Enden durch eine Wand 28a verschlossen. Die Warmluft wird U-förmig zum Hohlkörper 24 zurückgeführt und darin wieder aufgeheizt.

Der Heizkörper 29 ist ein Flüssigkeits-Heizkörper, in den weiche Kupferrohre 14b eingepreßt sind, wie dies weiter oben anhand von Figur 2 beschrieben ist. Die Verbindung erfolgt dann durch flüssigkeitsdichte Kupplungen 25.

Der Heizkörper 30 ist mit einer Vielzahl von nach oben gerichteten feinsten Düsen oder Luftaustrittsöffnungen 31 versehen, die über dem Heizkörper 30 eine durch Düsenströmungen unterstützte Thermik erzeugen und damit eine Warmluftsäule mit geringer Strömungsgeschwindigkeit, die im Raum ein eigenes und sehr angenehmes Mikroklima erzeugt. Das Ende ist durch eine Wand 30a verschlossen, jedoch kann durch - vorzugsweise verstellbare - Luftöffnungen in dieser Wand eine Einstellung der Thermik, also eine Änderung der Luftverteilung herbeigeführt werden. Für den Fall des Eindringens von Wasser sind zwei Entwässerungsöffnungen 30b vorgesehen. Durch die geringe relative Feuchte der Warmluft erfolgt eine Trocknung in jedem Falle sehr schnell.

Der Heizkörper 30 ist jedenfalls am schnellsten und innerhalb weniger Sekunden auf Betriebstemperatur sowohl der Oberseite bzw. Standfläche als auch der austretenden Warmluft zu bringen und extrem kostengünstig herzustellen. Ein solcher perforierter Flächenheizkörper kann auch als Trockenluftquelle für ein darüber aufgestelltes Wäschetrocknungsgestell verwendet werden, was besondere Vorteile nicht nur in der kalten und feuchten Jahreszeit hat.

Der Hohlkörper 24 ist als steifes und an der Enden verschlossenes Kastenprofil mit inneren Strömungskanälen ausgebildet. In der Trennfuge 5a sind die Heizkörper 27 bis 30 formschlüssig mit dem Hohlkörper 24 verbunden. Dadurch können Verbindungen innerhalb der anderen Trennfugen 5 zwischen den Langseiten der Heizkörper entfallen. Eine besonders wirksame Lagesicherung kann durch Klebebeläge erfolgen, vorzugsweise durch solche, die ein Wiederaufnehmen gestatten.

Die Oberseite des Hohlkörpers 24 ist auf einem Teil ihrer Länge mit einer Vielzahl von Austrittsöffnungen 26 für Warmluft versehen, über denen sich mit besonderem Vorteil ein Handtuchhalter 32 anbringen läßt. Auch in diesem Falle dient die Warmluft zur schnellen Vorwärmung der Handtücher und als Trockenluft für feuchte Handtücher oder andere Wäschestücke, was besondere Vorteile nicht nur in der kalten und feuchten Jahreszeit hat.

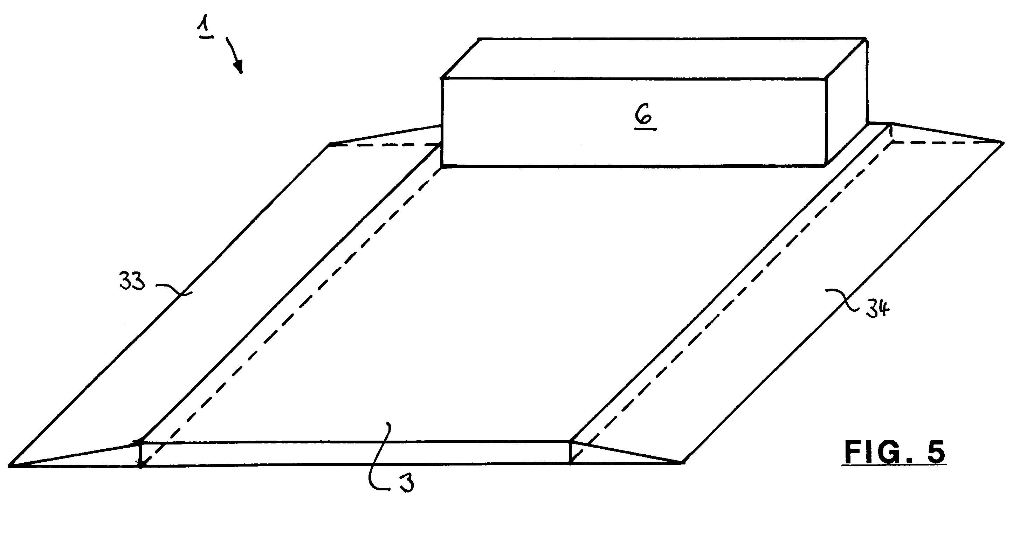

Figur 5 zeigt eine Variante des Gegenstandes nach Figur 3. Zwischen zwei keilförmigen Endstücken 33 und 34, die zur Vermeidung einer Stolpergefahr dienen und sowohl als durchströmte Heizkörper als auch ohne direkte Heizung ausgeführt sein können, weil sie auch durch Wärmeleitung beheizt werden, ist ein Heizkörper 3 angeordnet, der auch durch einen oder mehrere der Heizkörper 27 bis 30 nach Figur 4 ersetzt werden kann und daher nur beispielhaft ist. Der Heizkörper 3 bildet eine Baueinheit mit dem Durchlauferhitzer 6, der fest, aber lösbar, auf den Heizkörper 3 aufgesetzt ist und dessen elektrischer Anschluß der Einfachheit halber fortgelassen wurde. Die Beheizug ist auch hier durch Warmluft oder eine umgewälzte Flüssigkeit möglich. Schwer zugängliche Schmutzräume werden auf diese Weise vermieden.

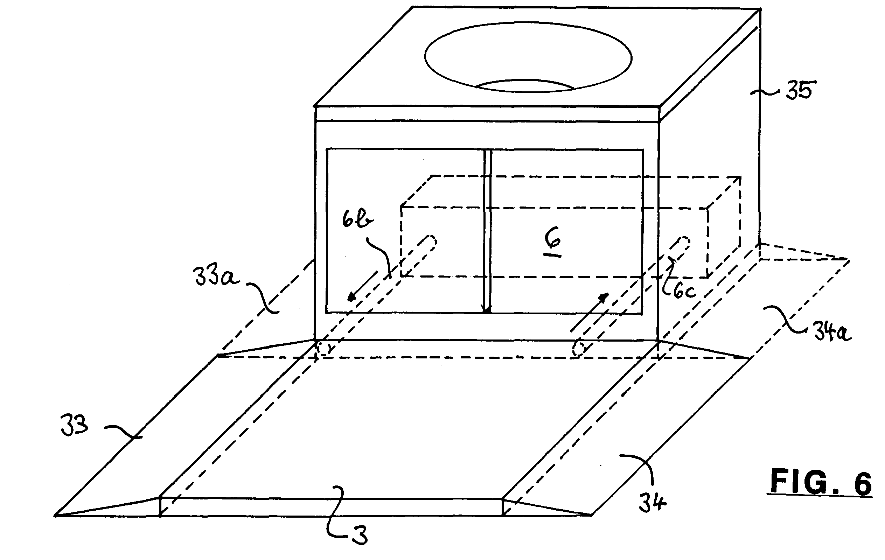

Figur 6 zeigt eine Kombinationsmöglichkeit der Fußbodenheizung 1 nach Figur 5 mit einem Waschtisch 35, vor dem der Heizkörper 3 als Standfläche angeordnet ist. In diesem Falle ist jedoch der Durchlauferhitzer 6 in dem Waschtisch 35 untergebracht und über verdeckte Leitungen 6b und 6c mit dem Heizkörper 3 verbunden. Die Endstücke 33 und 34 können beiderseits des Waschtischs 35 gestrichelt dargestellte fluchtende Verlängerungen 33a und 34a aufweisen, um schwer zu reinigende "tote Ecken" zu vermeiden. Die Oberseite des Durchlauferhitzers kann dann sogar als Handtuchablage dienen, so daß jederzeit auch vorgewärmte Handtücher zur Verfügung stehen.

Der Erfindungsgegenstand entfaltet besondere Vorteile auch in Mehrfamilienhäusern, in denen die Zentralheizung nachts mit einer Temperaturabsenkung gefahren wird. Frühaufsteher leiden dann unter einer unangenehmen Badezimmertemperatur, deren Komfortwerte auch nach hochschalten auf eine Tagestemperatuur erst allmählich erreicht werden.

### Bezugszeichenliste:

- 1: Fußbodenheizung
- 2: Bodenfläche
- 3: Heizkörper
- 3a: Heizkörper
- 3b: Außenseiten
- 3c: Unterseiten
- 4: elektrischer Anschluß
- 5: Trennfugen
- 5a: Trennfuge
- 6: Durchlauferhitzer
- 6a: Gehäuse
- 6b: Leitung
- 6c: Leitung
- 7: Feder-Nut-Verbindungen
- 8: Übergangsstücke
- 8a: Keilschneiden
- 9: Wärmedämmplatten
- 10: Waschbecken
- 11: Dekorbelag
- 12: Dichtungsmaterial
- 13: Dichtungsprofile
- 14: Nuten
- 14a: Nutwände
- 14b: Rohre
- 15: externe Leitung
- 16: Endstück
- 17: Endstück
- 18: Wand
- 19: Wand
- 20: Seitenwand
- 21: Öffnungen
- 22: Rohrstutzen
- 23: Rohrstützen
- 24: Hohlkörper
- 25: Flüssigkeitskupplungen
- 26: Austrittsöffnungen
- 27: Heizkörper
- 27a: Öffnungen
- 28: Heizkörper
- 28a: Wand
- 29: Heizkörper
- 29a: Wand
- 30: Heizkörper
- 30a: Wand
- 30b: Entwässerungsöffnungen
- 31: Luftaustrittsöffnungen
- 32: Handtuchhalter
- 33: Endstück
- 33a: Verlängerung
- 34: Endstück
- 34a: Verlängerung
- 35: Waschtisch

## Patentansprüche

1. Fußbodenheizung mit mindestens einem, auf eine vorhandene Bodenfläche (2) auflegbaren und von dieser wieder aufnehmbaren plattenförmigen Heizkörper (3, 3a 27, 28, 29, 30) mit mindestens einem Hohlraum für die Durchleitung eines fluiden Heizmediums und mit einer Wärmequelle für die Aufheizung des fluiden Heizmediums **dadurch gekennzeichnet**, daß die Wärmequelle ein elektrisch beheizter Durchlauferhitzer (6) für das fluide Heizmedium ist.

2. Fußbodenheizung nach Anspruch 1, **dadurch gekennzeichnet**, daß der Durchlauferhitzer (6) ein der Fußbodenheizung (1) zugeordneter elektrischer Flüssigkeitserhitzer ist.

3. Fußbodenheizung nach Anspruch 1, **dadurch gekennzeichnet**, daß der Durchlauferhitzer (6) ein der Fußbodenheizung (1) zugeordneter elektrischer Lufterhitzer ist.

4. Fußbodenheizung nach Anspruch 1, **dadurch gekennzeichnet,** daß mehrere Heizkörper (3, 3a, 27, 28, 29, 30) unter Verbindung ihrer Hohlräume formschlüssig miteinander verbunden sind.

5. Fußbodenheizung nach Anspruch 4, **dadurch gekennzeichnet,** daß die nicht mit einem benachbarten Heizkörper (3, 3a, 27, 28, 29, 30) verbundenen Außenseiten (3b) der Heizkörper (3, 3a, 27, 28, 29, 30) mindestens teilweise mit keilförmigen Übergangsstücken (8, 16, 17, 33, 34) verbunden sind, deren Keilschneiden (8a) in der gleichen Ebene wie die Unterseiten (3c) aller Heizkörper (3, 3a, 27, 28, 29, 30) liegen.

6. Fußbodenheizung nach Anspruch 1, **dadurch gekennzeichnet,** daß die Oberseite des Heizkörpers (3, 3a, 27, 28, 29, 30) mit einem Dekorbelag (11) versehen ist.

7. Fußbodenheizung nach Anspruch 4, **dadurch gekennzeichnet,** daß in den Trennfugen (5) zwischen den Heizkörpern (3, 3a, 27, 28, 29, 30) Dichtungsmaterial (12) angeordnet ist.

8. Fußbodenheizung nach Anspruch 7, **dadurch gekennzeichnet,** daß in die Trennfugen (5) zwischen den Heizkörpern (3, 3a, 27, 28, 29, 30) Dichtungsprofile (13) eingelegt sind.

9. Fußbodenheizung nach mindestens einem der Ansprüche 4 und 6 **dadurch gekennzeichnet,** daß die Dekorbeläge (11) mehrerer Heizkörper (3, 27, 28, 29, 30) die Trennfugen (5) überdeckend angeordnet sind.

10. Fußbodenheizung nach mindestens einem der Ansprüche 1 bis 9, **dadurch gekennzeichnet,** daß der mindestens eine Heizkörper (3, 29) mit einseitig offenen Nuten (14) versehen ist, in die Rohre (14b) eingepreßt sind.

11. Fußbodenheizung nach mindestens einem der Ansprüche 1 bis 10, **dadurch gekennzeichnet,** daß die Nuten (14) nach oben hin durch den Dekorbelag (11) verschlossen sind.

12. Fußbodenheizung nach mindestens einem der Ansprüche 1 bis 10, **dadurch gekennzeichnet,** daß die Nuten (14) nach unten hin durch eine Wärmedämmplatte (9) verschlossen sind.

13. Fußbodenheizung nach Anspruch 1, **dadurch gekennzeichnet,** daß der mindestens eine Heizkörper (3, 3a, 27, 28, 29, 30) aus einem Strangpreßprofil besteht.

14. Fußbodenheizung nach Anspruch 1, **dadurch gekennzeichnet,** daß der mindestens eine Heizkörper (3, 29) aus einem mit Nuten (14) versehenen Preßkörper besteht.

15. Fußbodenheizung nach Anspruch 1, **dadurch gekennzeichnet,** daß auf mindestens einer Seite mindestens eines mit Längskanälen versehenen Heizkörpers (3, 27) ein Endstück (16) angeordnet ist, das an ein Gehäuse (6a) des Wärmetauschers (6) angeschlossen ist, in dem sich eine Reihenschaltung aus einer Fördereinrichtung und einer elektrischen Wärmequelle befindet.

16. Fußbodenheizung nach Anspruch 1, **dadurch gekennzeichnet,** daß beiderseits mindestens eines mit Längskanälen versehenen Heizkörpers (3) Endstücke (16, 17) angeordnet sind, die an ein Gehäuse (6a) eines Wärmetauschers (6) angeschlossen sind, in dem sich eine Reihenschaltung aus eine Fördereinrichtung und einer elektrischen Wärmequelle befindet, über die das erwärmte Heizmedium im Kreislauf führbar ist.

17. Fußbodenheizung nach Anspruch 16, **dadurch gekennzeichnet,** daß das Gehäuse (6a) des Wärmetauschers (6) die Enstücke (16, 17) und den mindestens einen Heizkörper (3) überbrückt.

18. Fußbodenheizung nach Anspruch 3, **dadurch gekennzeichnet**, daß der mindestens eine Heizkörper (30) auf seiner Oberseite mit einer Vielzahl von Luftaustrittsöffnungen (31) versehen ist.

19. Fußbodenheizung nach Anspruch 18, **dadurch gekennzeichnet**, daß bei Anordnung mehrerer Heizkörper (3, 27, 28, 29, 30) mindestens einer der Heizkörper (30) mit einer Vielzahl von Luftaustrittsöffnungen (31) versehen ist.

20. Fußbodenheizung nach Anspruch 1, **dadurch gekennzeichnet**, daß mehrere Heizkörper (27, 28, 29, 30) in Parallelanordnung an einen durchgehenden Hohlkörper (24) für die Führung des Heizmediums angeschlossen sind.

21. Fußbodenheizung nach Anspruch 20, **dadurch gekennzeichnet**, daß die Oberseite des Hohlkörpers (24) auf mindestens einem Teil ihrer Länge mit einer Vielzahl von Luftaustrittsöffnungen (26) versehen ist.

22. Fußbodenheizung nach Anspruch 1, **dadurch gekennzeichnet**, daß der Durchlauferhitzer (6) und der mindestens eine Heizkörper (3, 3a, 27, 28, 29, 30) eine Baueinheit darstellen.

23. Fußbodenheizung nach Anspruch 1, **dadurch gekennzeichnet**, daß der Durchlauferhitzer (6) in einen Waschtisch (35) eingebaut ist.

24. Fußbodenheizung nach Anspruch 23, **dadurch gekennzeichnet**, daß mindestens ein Teil der Heizkörper (3, 3a, 27, 28, 29, 30) vor dem Waschtisch angeordnet ist.
